# EUROPÄISCHE PATENTSCHRIFT

(11) **EP 2 297 478 B1**
(45) Veröffentlichungstag und Bekanntmachung des Hinweises auf die Patenterteilung: **06.09.2017**
(21) Anmeldenummer: 09765526.0
(22) Anmeldetag: 29.05.2009
(51) Int. Cl.: F16D 66/02

(54) **EINRICHTUNG ZUR VERSCHLEISSERKENNUNG EINES BREMSBELAGES EINER SCHEIBENBREMSE SOWIE BREMSBELAG FÜR EINE SCHEIBENBREMSE**
DEVICE FOR RECOGNIZING WEAR OF A BRAKE PAD OF A DISK BRAKE, AND BRAKE PAD FOR A DISK BRAKE
DISPOSITIF DE DÉTECTION D USURE D UNE GARNITURE DE FREIN DANS UN FREIN À DISQUE ET GARNITURE DE FREIN POUR FREIN À DISQUE

(30) Priorität: 30.05.2008 DE 102008026104
(43) Veröffentlichungstag der Anmeldung: 23.03.2011
(73) Patentinhaber: KNORR-BREMSE Systeme für Nutzfahrzeuge GmbH, 80809 München (DE)
(72) Erfinder: SALAPIC, Borislav, 80636 München (DE)
(74) Vertreter: Mattusch, Gundula
(86) Internationale Anmeldenummer: PCT/EP2009/003887
(87) Internationale Veröffentlichungsnummer: WO 2009/152946

(56) Entgegenhaltungen:
- EP-A1- 0 692 652
- EP-A1- 1 826 451
- WO-A1-2005/106280
- WO-A1-2007/057184
- DE-A1- 3 230 266
- DE-A1- 10 231 415

## Beschreibung

Die Erfindung betrifft eine Einrichtung zur Verschleißerkennung eines Bremsbelages entsprechend dem Oberbegriff des Anspruchs 1 sowie einen Bremsbelag einer Scheibenbremse.

Zur Überwachung der Reibbelagdicke, insbesondere zur Feststellung einer zulässigen Verschleißgrenze des Reibbelages des Bremsbelages sind Kontaktleiter bekannt, beispielsweise in Form von Kabeln, die bei Erreichen der Verschleißgrenze, also wenn der Reibbelag entsprechend weit abgerieben ist, von der mit dem Reibbelag bei einer Bremsung in Kontakt stehenden Bremsscheibe angeschliffen werden, wodurch ein elektrischer Impuls an einen Signalgeber gegeben wird. Dieser zeigt an, dass die zulässige Verschleißgrenze des Bremsbelages erreicht ist und ein Auswechseln erforderlich wird.

Ein solcher Kontaktleiter ist in einer gattungsgemäßen Einrichtung jeweils gemäß der DE 32 30 266 A1, der WO 2005/106280 A1 und der WO 2007/057184 A1 festgelegt, die als Halterung klemmend in eine den Reibbelag tragenden Belagträgerplatte des Bremsbelages eingreift, wobei der Anlageschenkel, durch den beispielsweise das besagte Kabel geführt ist, in einer Aussparung des Reibbelages einliegt und in diesen so weit hineinragt, dass das einliegende Kabel an einer vorbestimmten Minimaldicke des Reibbelages positioniert ist.

Zur klemmenden Verbindung der Halterung an der Belagträgerplatte ist das Klemmelement mit zwei Klemmschenkeln ausgestattet, die elastisch gegeneinander drückbar sind, zum Einfügen der Halterung in die Belagträgerplatte und danach aufgrund der den Klemmschenkeln innewohnenden Rückstellkräfte gegen die Wandungen der Ausnehmung der Belagträgerplatte gepresst werden, wodurch sich ein Reibschluss ergibt, der in Einschieberichtung der Halterung eine Sicherung bildet.

Der Anlageschenkel ist auf seiner der Belagträgerplatte zugewandten Seite mit Anlageflächen versehen, die an der Belagträgerplatte anliegen, während die Klemmschenkel abgewinkelt ebenfalls Anlageflächen aufweisen, die an der anderen Seite der Belagträgerplatte anschlagen, so dass die Halterung insgesamt verschiebegesichert in der Ausnehmung einliegt.

Der Übergang zwischen dem Anlageschenkel und dem Klemmelement ist bislang, zumindest in Spreizrichtung scharfkantig ausgebildet, wodurch sich eine Kerbwirkung ergibt, mit der Folge, dass diese Bereiche zu einer Rissbildung neigen, insbesondere aufgrund der hohen mechanischen Belastung im Fahrbetrieb eines Nutzfahrzeuges, in das solche Bremsbeläge insbesondere eingebaut sind.

Durch die entstehenden Risse werden die für eine Klemmung notwendigen Rückstellkräfte nicht in dem geforderten Maße wirksam, so dass ein sicherer Sitz unter allen Betriebsbedingungen nicht gewährleistet ist.

Der Erfindung liegt die Aufgabe zugrunde, eine Einrichtung und einen Bremsbelag der gattungsgemäßen Art so weiterzuentwickeln, dass deren Standzeit und Funktionsfähigkeit verbessert wird.

Diese Aufgabe wird durch eine Einrichtung mit den Merkmalen des Anspruchs 1 und einen Bremsbelag mit den Merkmalen des Anspruchs 4 gelöst.

Eine solche Einrichtung zeichnet sich vor allem durch ihre Robustheit aus, d.h., ihre Unanfälligkeit gegen Rissbildung auch bei härtesten Betriebsbedingungen hinsichtlich auftretender Erschütterungen im Fahrbetrieb.

Naturgemäß führt dies gegenüber dem Stand der Technik zu einer durchaus bemerkenswerten Kosteneinsparung, da eine Ersatzbeschaffung und ein sich daraus ergebender Montageaufwand nicht mehr erforderlich ist bzw. nicht mehr betrieben werden muss.

Daneben ist die Verbesserung der Funktionssicherheit ein weiteres Kriterium, das die Erfindung auszeichnet.

Während bislang die Einrichtung durch die bei einer Rissbildung nicht mehr gewährleistete Klemmung aus ihrer Klemmstellung herausrutschen kann, ist dies durch die Erfindung unterbunden, so dass die Einrichtung praktisch über die Standzeit des Bremsbelages voll funktionsfähig bleibt, was die Sicherheit des Gesamtsystems gleichfalls verbessert.

Durch die Erfindung ist eine Querschnittsminderung des Anlageschenkels in diesem Bereich gegeben, wodurch eine gewisse Federung erreicht wird, die ebenfalls zu einer Vermeidung der Rissbildung beiträgt.

Weitere vorteilhafte Ausbildungen der Erfindung sind in den Unteransprüchen gekennzeichnet.

Ein Ausführungsbeispiel der Erfindung sowie eine Einrichtung nach dem Stand der Technik werden nachfolgend anhand der beigefügten Zeichnungen beschrieben.

Es zeigen:
- Figur 1: einen Teil einer Einrichtung zur Verschleißerkennung nach dem Stand der Technik in einer Draufsicht
- Figur 2: einen erfindungsgemäßen Bremsbelag in einer Vorderansicht
- Figur 3: einen vergrößerten Teilausschnitt des Bremsbelages in einer Draufsicht
- Figur 4: einen Teilausschnitt des Bremsbelages entsprechend der Kennzeichnung IV in Figur 2
- Figur 5: eine Einzelheit der Einrichtung in einer Draufsicht.

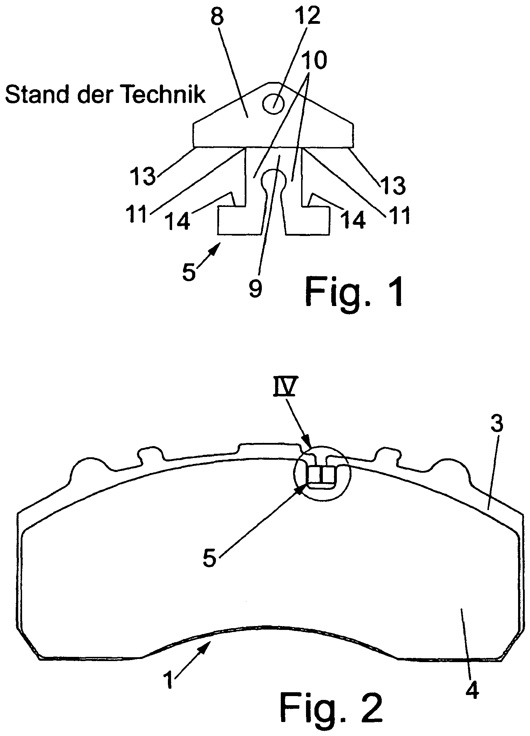

In der Figur 1 ist ein Halter 5, gemäß dem Stand der Technik einer Einrichtung zur Verschleißerkennung eines Bremsbelages einer Scheibenbremse dargestellt, wie er in der Figur 2 in einer Vorderansicht gezeigt ist.

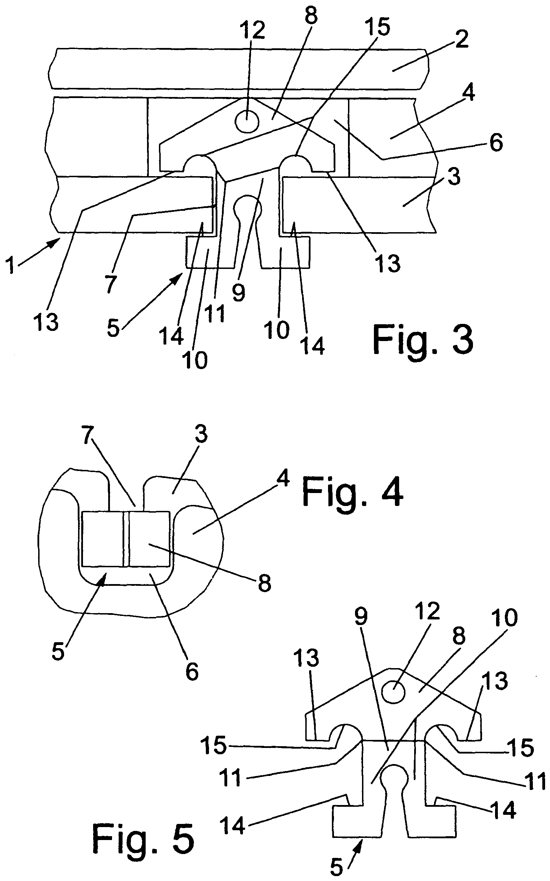

Dieser Bremsbelag 1 weist eine Belagträgerplatte 3 sowie einen daran befestigten Reibbelag 4 auf, der im Fall einer Bremsung gegen eine Bremsscheibe 2 (Figur 3) pressbar ist.

Dieser Halter 5, ebenso wie der gemäß der Erfindung (Figuren 3 und 5) weist einen Anlageschenkel 8 auf mit Anlageflächen 13, die an der Belagträgerplatte 3 anliegen.

Des Weiteren ist in dem Anlageschenkel 8 eine Durchführung 12 vorgesehen, durch die ein nicht dargestelltes Kabel führbar ist, das als Verschleißsensor dient.

Der Halter 5 liegt eingeklemmt in einer Ausnehmung 7 der Belagträgerplatte 3 ein, während der Anlageschenkel 8 in eine Aussparung 6 des Reibbelages 4 ragt.

Dabei entspricht der Abstand der Durchführung 12 bzw. des eingefügten Kabels zur Belagträgerplatte 3 der minimal zulässigen Dicke des Reibbelages 4. Wenn dieser durch Kontakt mit der Bremsscheibe 2 so weit abgerieben ist, dass die Bremsscheibe 2 das Kabel bzw. den innen liegenden Leiter kontaktiert, wird dies von einem Signalgeber erkannt und angezeigt.

An den Anlageschenkel 8 ist ein Klemmelement 9 angeschlossen, das zwei gegeneinander elastisch bewegbare Klemmschenkel 10 aufweist, die in Spreizstellung reibschlüssig an der Wandung der Ausnehmung 7 anliegen.

Auf der dem Anlageschenkel 8 abgewandten Seite weisen die Klemmschenkel 10 abgewinkelte Anlageflächen 14 auf, die sich an der dem Reibbelag 4 abgewandten Seite der Belagträgerplatte 3 abstützen.

Wie in der den Stand der Technik wiedergebenden Figur 1 deutlich erkennbar ist, ist der mit dem Bezugszeichen 11 versehene Übergangsbereich zwischen dem Klemmelement 9 und dem Anlageschenkel 8 jeweils scharfkantig ausgebildet.

Erfindungsgemäß ist dieser Übergangsbereich 11 bei dem neuen Halter 5 (Figuren 3 und 5) gerundet und zwar bei dem vorliegenden Ausführungsbeispiel in Form einer Hohlkehle 15, die eine kreisbogenförmige Kontur aufweist.

An die jeweilige Hohlkehle 15 schließt sich dann jeweils die Anlagefläche 13 an.

Wie deutlich erkennbar ist, ist der Übergangsbereich 11 zwischen dem Klemmelement 9 und dem Anlageschenkel 8 glattflächig, d.h., konturenfrei ausgebildet.

### Bezugszeichenliste

- 1: Bremsbelag
- 2: Bremsscheibe
- 3: Belagträgerplatte
- 4: Reibbelag
- 5: Halter
- 6: Aussparung
- 7: Ausnehmung
- 8: Anlageschenkel
- 9: Klemmelement
- 10: Klemmschenkel
- 11: Übergangsbereich
- 12: Durchführung
- 13: Anlagefläche
- 14: Anlagefläche
- 15: Hohlkehle

## Patentansprüche

1. Einrichtung zur Verschleißerkennung eines Bremsbelages (1) einer Scheibenbremse, mit einem in eine Belagträgerplatte (3) des Bremsbelages (1) einsteckbaren Halter (5) zur Halterung eines Kontaktleiters, mit einem eine Aufnahme für den Kontaktleiter aufweisenden, in Funktionsstellung an der Belagträgerplatte (3) anliegenden Anlageschenkel (8), an den ein Klemmelement (9) mit zwei gegeneinander elastisch bewegbaren, in Funktionsstellung mit abgewinkelten, Anlageflächen (14) an der dem Anlageschenkel (8) gegenüberliegenden Seite der Belagträgerplatte (3) anliegenden Klemmschenkeln (10) angeschlossen ist, **dadurch gekennzeichnet, dass** die Übergangsbereiche (11) zwischen dem Klemmelement (9) und dem Anlageschenkel (8) in Spreizrichtung der Klemmschenkel (10) gerundet sind, wobei jede Rundung durch eine rinnenförmige, eine kreisbogenförmige Kontur aufweisende Hohlkehle (15) gebildet ist, die sich in Richtung des Klemmelementes (9) an eine Anlagefläche (13) des Anlageschenkels (8) anschließt.

2. Einrichtung nach Anspruch 1, **dadurch gekennzeichnet, dass** der Übergang zwischen der Hohlkehle (15) und dem Klemmelement (9) glattflächig verläuft.

3. Einrichtung nach Anspruch 1 oder 2, **dadurch gekennzeichnet, dass** die Hohlkehle (15) sich durchgehend im Anlageschenkel (8) erstreckt.

4. Bremsbelag einer Scheibenbremse, mit einer Belagträgerplatte (3) und einem darauf befestigten Reibbelag (4) sowie einer Einrichtung zur Verschleißerkennung gemäß dem Anspruch 1.

## Claims

1. Device for recognizing wear of a brake pad (1) of a disk brake, comprising a holder (5) which can be inserted in a pad carrier plate (3) of the brake pad (1) and which serves for holding a contact conductor, which holder has a contact arm (8) which has a receptacle for the contact conductor and which in a functional position bears against the pad carrier plate (3), to which contact arm (8) there is connected a clamping element (9) with two clamping arms (10) which can be moved elastically towards one another and which in a functional position bear with angled contact faces (14) against that side of the pad carrier plate (3) which is situated opposite the contact arm (8), **characterized in that** the transition regions (11) between the clamping element (9) and the contact arm (8) are rounded in the spreading direction of the clamping arms (10), wherein each rounding is formed by a channel-shaped groove (15) which has an arcuate contour and which in the direction of the clamping element (9) adjoins a contact face (13) of the contact arm (8).

2. Device according to Claim 1, **characterized in that** the transition between the groove (15) and the clamping element (9) has a smoothly configured surface.

3. Device according to Claim 1 or 2, **characterized in that** the groove (15) extends continuously in the contact arm (8).

4. Brake pad of a disk brake, comprising a pad carrier plate (3) and a friction lining (4) fastened thereto, and a device for recognizing wear according to Claim 1.

## Revendications

1. Dispositif de détection de l'usure d'une garniture (1) d'un frein à disque, comprenant un reteneur (5), pouvant être enfiché dans un plateau (3) formant porte-garniture de la garniture (1) de frein, pour retenir un conducteur de contact, comprenant une branche (8) d'application, qui a un logement pour le conducteur de contact, qui, en la position de fonctionnement, s'applique au plateau (3) formant porte-garniture et à laquelle est raccordé un élément (9) de serrage ayant des branches (10) de serrage pouvant être déplacées élastiquement l'une vers l'autre, s'appliquant par des surfaces (14) d'application coudées en la position de fonction au côté du plateau (3) formant porte-garniture opposé à la branche (8) d'application, **caractérisé en ce que** les régions (11) de transition, entre l'élément (9) de serrage et la branche (8) d'application, sont arrondies dans la direction d'écartement des branches (10) de serrage, chaque arrondi étant formé par une gorge (15) en forme de rainure, qui a un contour en forme d'arc de cercle et qui se raccorde, dans la direction de l'élément (9) de serrage, à une surface (13) d'application de la branche (8) d'application.

2. Dispositif suivant la revendication 1, **caractérisé en ce que** la transition, entre la gorge (15) et l'élément (9) de serrage, est de surface lisse.

3. Dispositif suivant la revendication 1 ou 2, **caractérisé en ce que** la gorge (15) s'étend de manière continue dans la branche (8) d'application.

4. Garniture d'un frein à disque, comprenant un plateau (3) formant porte-garniture et une garniture (4) de friction qui y est fixée ainsi qu'un dispositif de détection de l'usure suivant la revendication 1.
